# FASCICULE DE BREVET EUROPEEN

(11) **EP 1 226 581 B1**
(45) Date de publication et mention de la délivrance du brevet: **11.02.2004**
(21) Numéro de dépôt: 00974642.1
(22) Date de dépôt: 03.11.2000
(51) Int. Cl.: G11B 7/26

(54) **PROCEDE ET DISPOSITIF D'INITIALISATION DE DISQUES OPTIQUES NUMERIQUES**
VERFAHREN UND VORRICHTUNG ZUR INITIALISIERUNG EINER OPTISCHEN DATENSPEICHERPLATTE
METHOD AND DEVICE FOR INITIALISING DIGITAL OPTICAL DISCS

(30) Priorité: 04.11.1999 FR 9913775
(43) Date de publication de la demande: 31.07.2002
(73) Titulaire: Innopsys, 31220 Martres Tolosane (FR)
(72) Inventeur: BEC, Daniel, F-31270 Villeneuve Tolosane (FR); LE MERER, Jean-Pierre, F-31120 Roquettes (FR); ANTOUARD, Bohdan, F-31470 Fontenilles (FR); LE BRUN, Stéphane, 31390-CARBONNE-France (FR); BOUET, Laurence, 31270-CUGNAUX-FRANCE (FR)
(74) Mandataire: Santarelli
(86) Numéro de dépôt international: PCT/FR2000/003063
(87) Numéro de publication internationale: WO 2001/033564

(56) Documents cités:
- EP-A- 0 848 379
- PATENT ABSTRACTS OF JAPAN vol. 016, no. 365 (P-1397), 6 août 1992 (1992-08-06) & JP 04 113519 A (TORAY IND INC), 15 avril 1992 (1992-04-15)
- DATABASE WPI Week 199144 Derwent Publications Ltd., London, GB; AN 1991-322295 XP002142663 -& JP 03 216816 A (FUJI ELECTRIC MFG CO LTD), 24 septembre 1991 (1991-09-24)
- PATENT ABSTRACTS OF JAPAN vol. 010, no. 169 (P-468), 14 juin 1986 (1986-06-14) & JP 61 020236 A (HITACHI SEISAKUSHO KK), 29 janvier 1986 (1986-01-29)

## Description

La présente invention concerne le domaine des équipements d'écriture de données sur des supports informatiques de type disques optiques.

On rappelle que certains disques optiques numériques de type réinscriptible (par exemple de type dit CD-RW ― ReWritable-, DVD-RW, ou DVD-RAM) utilisent pour permettre la fonction de réinscription sur le même support un effet de changement de phase d'un matériau sensible (typiquement alliage à base de tellure), et qui passe d'un état cristallin à un état amorphe et réciproquement sous l'effet de la température, ces deux états étant stables à température ambiante, le disque étant généralement constitué d'une galette en polycarbonate recouverte de couches de diélectrique, dudit matériau sensible, d'une autre couche de diélectrique, et finalement d'un réflecteur métallique aluminisé.

Lors de la fabrication, l'état de la couche sensible est amorphe. Pour rendre les disques optiques propres à leur première utilisation, il est nécessaire de rendre le disque cristallin sur toute la surface (ce qui est souvent assimilé au fait d'écrire des zéros partout sur la couche sensible).

On utilise pour ce faire un équipement dit initialiseur, qui vient chauffer la couche sensible du disque localement, tout en évitant de faire fondre le substrat en polycarbonate. Le chauffage de la couche sensible est réalisé à une température de l'ordre de 150°C à 200°C (suivant la composition et la nature de la couche sensible).

Le document EP-0 848 379 et l'abrégé en anglais du document JP-61 020236 révèlent un dispositif d'initialisation de disque optique numérique du type comportant une couche sensible à deux états stables. Un faisceau laser est focalisé sur la couche sensible pour réaliser le passage d'un état stable à l'autre de façon réversible.

On connaît dans ce domaine en particulier des initialiseurs du commerce, utilisant une diode laser de chauffage de la surface, dont la longueur de pinceau lumineux est de 100 µm environ, pour 1 µm de largeur, avec une puissance de chauffage de 1 W répartie sur cette zone. Le balayage des pistes se fait avec un chevauchement en longueur.

L'utilisation d'une diode de 1 Watt permet d'initialiser un disque optique numérique en environ 45 secondes. Ce temps est fonction de la puissance en Watts optique disponible.

Il est clair que ce temps d'initialisation, lorsque il est comparé avec le temps de fabrication effectif du disque (dépôt des couches successives), c'est à dire 7 à 10 secondes environ et parfois encore moins, paraît très long.

Une telle différence de cadence oblige à utiliser 6 à 12 initialiseurs travaillant en parallèle sur chaque chaîne de fabrication de disques optiques numériques pour maintenir le flux constant, ce qui est évidemment très coûteux.

La tendance actuelle est alors de chercher à réduire le temps de cycle de fabrication vers 3 ou 4 secondes, et parallèlement celui des initialiseurs vers 15 à 20 secondes. Il s'agit alors d'augmenter la puissance thermique focalisée sur une zone de la couche sensible du disque, sans pour autant détruire ou endommager le substrat en polycarbonate, qui ne supporte pas une température locale supérieure à 80°C.

On envisage actuellement des dispositifs utilisant une diode jusqu'à 4 ou 6 Watts, avec un pinceau lumineux de 200 à 500 µm de long et 1 µm de large, utilisant une focalisation précise sur la surface du disque optique numérique, de manière à ce que la chaleur soit transmise essentiellement à la couche sensible du disque. Un tel dispositif contraint à un suivi très précis de la surface du disque par le pinceau laser, et pose donc des problèmes mécaniques de suivi de cette surface. Ces problèmes se traduisent par un surcoût des machines.

La focalisation est réalisée automatiquement par un dispositif appelé autofocus. Ce dispositif rencontre des difficultés pour faire la mise au point sur le disque car la surface du disque à initialiser est peu réfléchissante. Le temps nécessaire pour faire la mise au point est important, ce qui augmente la durée du cycle d'initialisation. Les dispositifs autofocus utilisés sont de plus généralement peu fiables et manquent de robustesse.

La présente invention entend donc remédier à ces inconvénients en proposant un nouveau procédé et le dispositif d'initialisation de disques optiques numériques réinscriptibles associé, dont le temps de cycle soit de l'ordre de 15 à 20 secondes.

L'invention a également pour objectif un dispositif plus simple de mise en oeuvre.

L'invention vise alors sous un premier aspect un procédé d'initialisation de disque optique numérique réinscriptible du type comportant une couche sensible à deux états stables et tel qu'un chauffage local réalisé par projection d'une tache lumineuse permet le passage d'un état à l'autre état de façon réversible, la puissance lumineuse et la vitesse de passage de la tache lumineuse correspondant à une densité lumineuse optique permettant de réaliser le passage d'un état à l'autre de la couche sensible.

Selon l'invention, la tache lumineuse présente une profondeur de champ supérieure à 25 µm et une largeur comprise entre 5 et 20 µm pour une longueur comprise entre 50 et 500 µm environ.

L'utilisation d'une tache lumineuse avec une profondeur de champ élevée permet de résoudre les problèmes liés à la focalisation. Grâce à cette profondeur de champ élevée, la mise au point n'a pas besoin d'être particulièrement affinée et peut donc être réalisée très rapidement ou être réglée uniquement de temps en temps.

Selon un mode de mise en oeuvre préféré, le procédé d'initialisation d'un disque optique selon l'invention comporte les étapes suivantes :
- chargement d'un disque, et dépôt du disque sur un plateau aspirant d'un sous-ensemble rotation d'un dispositif d'initialisation,
- aspiration du disque pour le maintenir en position,
- mise en rotation du disque par un moteur de rotation, pour atteindre une vitesse de défilement de piste comprise entre 3 m/s et 50 m/s,
- mise en place d'un système optique comprenant au moins une diode laser au dessus du disque, au niveau du rayon extérieur, par mise en marche simultanée d'un moteur de rotation d'avance,
- mise en marche de la diode laser, et initialisation du disque pendant une durée fonction de la puissance optique choisie,
- retour du système optique dans sa position initiale de repos, et arrêt de la rotation du disque par arrêt du moteur de rotation,
- légère surpression pour libérer le disque du plateau du sous-ensemble de rotation,
- déchargement du disque.

Sous un autre aspect, l'invention vise également un dispositif d'initialisation d'un disque optique numérique réinscriptible présentant une couche sensible, comportant :
- un sous-ensemble optique créant un faisceau de chauffage local de la couche sensible du disque, adapté à permettre le changement de phase du matériau constituant ladite couche sensible et l'initialisation effective du disque,
- un sous-ensemble d'avance du faisceau de chauffage sur la surface du disque, et
- un sous-ensemble de rotation qui vient entraîner le disque en rotation lors de la phase d'initialisation.

Ce dispositif est, selon l'invention, caractérisé en ce que le sous ensemble optique comprend au moins une diode laser commandée par un dispositif de commande laser, et un système optique de focalisation, en ce que chaque diode laser est de longueur d'onde sensiblement comprise entre 700 et 1000 nanomètres, et en ce que le dispositif utilise un faisceau de chauffage ayant un angle d'ouverture faible, une profondeur de champ supérieure à 25 µm au niveau de la couche sensible, et une largeur comprise entre 5 et 20 µm pour une longueur comprise entre 50 et 500 µm environ.

Avantageusement, le sous-ensemble optique réalise deux grandissements différents sur les deux axes du pinceau laser créé par la diode laser au nombre d'au moins une. Ces grandissements seront de préférence indépendants l'un de l'autre. Pour ce faire, le sous-ensemble optique comporte par exemple deux lentilles cylindriques permettant de travailler sur les deux axes séparément, la lentille travaillant sur l'axe latéral (dimension du pinceau initial généralement de 1 µm), fournissant un grandissement compris entre 6 et 15 environ, et la lentille travaillant sur l'axe longitudinal assurant une focalisation de cet axe au même endroit que l'axe latéral, avec un grandissement inférieur ou égal à 1.

Dans cette forme de réalisation, on peut prévoir que le sous-ensemble optique comprend un collimateur asphérique permettant d'obtenir un faisceau parallèle, et deux lentilles cylindriques dans les conditions de Gauss au centre, ou corrigées pour être utilisées dans des ouvertures plus importantes.

Une forme de réalisation du dispositif selon l'invention prévoit que le dispositif de commande laser, qui contrôle la diode au nombre d'au moins une, réalise un asservissement laser sur trois niveaux :
1/ asservissement rapide en courant (quelques microsecondes) de type analogique pour l'élimination du bruit,
2/ asservissement en lumière (quelques millisecondes) permettant d'augmenter la puissance de l'intérieur vers l'extérieur dans le cas d'une initialisation à vitesse angulaire constante,
3/ asservissement lent (dont le senseur est la réflectivité) qui doit permettre des calibrages.

Le sous-ensemble de rotation placé sous le disque à initialiser comporte par exemple un système d'aspiration qui vient maintenir le disque en place selon un plan précis par l'intermédiaire d'une feuille poreuse souple destiné à prendre place entre un plateau et le disque à initialiser, un moteur de rotation, un codeur de rotation, un dispositif de commande de rotation régulant le fonctionnement du moteur de rotation, et le système d'aspiration du disque comporte par exemple des moyens pour effectuer cette aspiration entre des roulements du moteur de rotation.

Dans un dispositif selon l'invention, le sous-ensemble d'avance du faisceau de chauffage sur la surface du disque peut comprendre un moyen de rotation, d'axe parallèle à l'axe de rotation du disque, et sur l'axe duquel est solidarisé une poutre optique comprenant le sous-ensemble optique.

Dans une forme de réalisation préférée, la diode laser au nombre d'au moins une utilisée est une diode à large ouverture d'émission qui se présente sous la forme d'une barrette d'une puissance supérieure à 2 W, de préférence supérieure à 3 W.

Le dispositif selon l'invention peut comporter plusieurs lasers. Dans le cas de deux diodes lasers, celles-ci émettent par exemple chacune en direction d'un cube séparateur de polarisation destiné à combiner les deux sources lumineuses pour obtenir une tache lumineuse de plus grande puissance.

La description faite en référence au dessin annexé permettra de mieux comprendre les buts et avantages de l'invention. Il est clair que cette description est donnée à titre d'exemple, et n'a pas de caractère limitatif. Dans le dessin :
la figure 1 est une représentation schématique générale d'un initialiseur selon l'invention,
les figures 2A à 2D illustrent l'effet d'un décalage angulaire dans des systèmes à forte ouverture numérique et faible profondeur de champ existants,
les figures 3A et 3B illustrent de façon analogue l'effet d'un décalage angulaire pour un dispositif à grande profondeur de champ, conforme à la présente invention,
les figures 4A à AC représentent le profil d'une barrette laser et du faisceau lumineux transmis sur la surface chauffée de la couche sensible du disque,
les figures 5A à 5D illustrent des exemples de systèmes optiques à deux grandissements différents, et
la figure 6 montre sous forme schématique le système d'avance en rotation du dispositif.

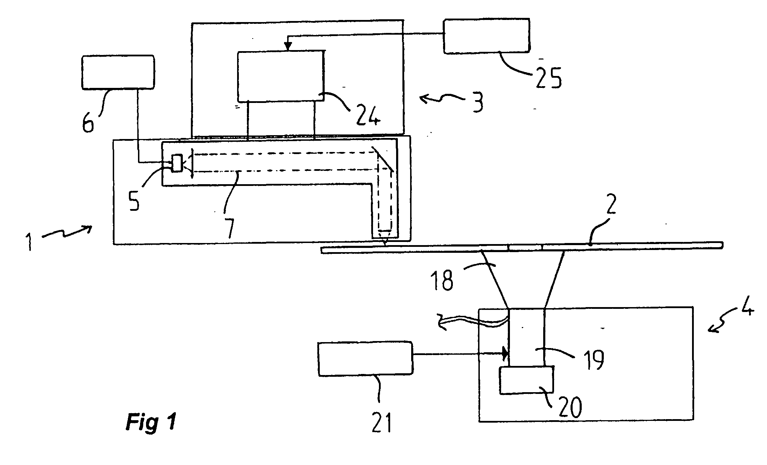

Comme on le voit sur la figure 1, un dispositif d'initialisation de disques optiques numériques réinscriptibles selon l'invention comporte plusieurs sous-ensembles principaux :
- un sous-ensemble optique 1, comprenant une diode laser 5 commandée par un dispositif de commande laser 6 et un système optique de focalisation 7, qui vient juste au dessus de la surface d'un disque 2, par exemple de type DVD ou CD, et qui comporte un dispositif de chauffage local de surface permettant le changement de phase du matériau et l'initialisation effective du disque,
- un sous-ensemble d'avance 3 régulant la position de la diode laser 5 relativement au rayon du disque 2,
- un sous-ensemble de rotation 4, qui vient entraîner le disque 2 en rotation lors de la phase d'initialisation.

La source laser 5 choisie pour le présent dispositif est de longueur d'onde comprise entre 750 et 1000 nanomètres, avec une puissance supérieure à 3 Watts. Elle est de type classique dans ce domaine et se présente sous forme d'une barrette 5.

Le système optique de focalisation est défini par la largeur du pinceau que l'on souhaite obtenir sur la surface du disque optique, ainsi que par la profondeur de champ.

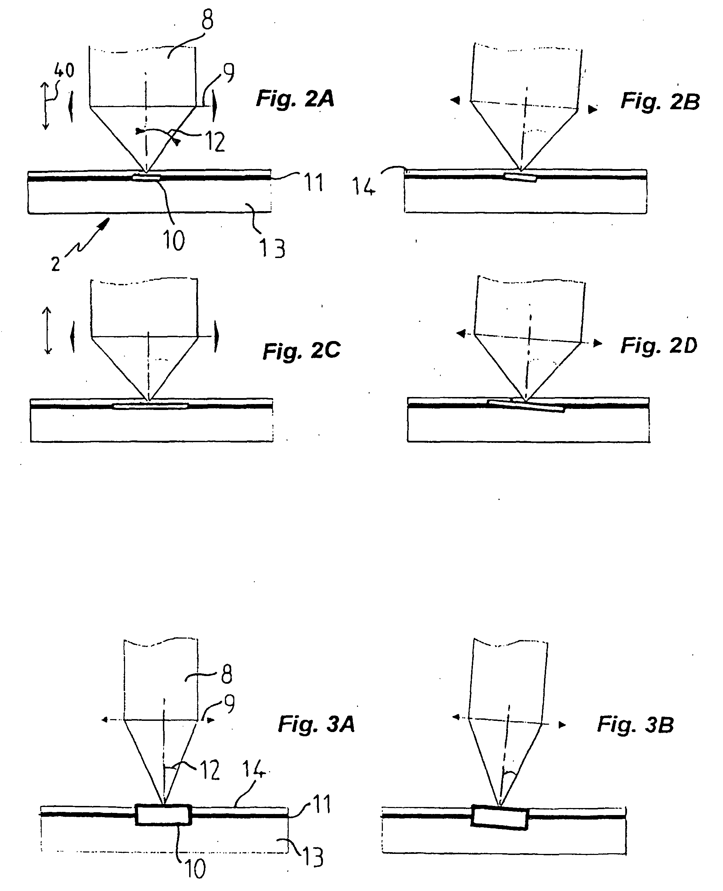

On rappelle ici que dans un dispositif de type classique une diode laser de 1 W est focalisée sur un pinceau de 100 µm de long par un micron (1 µm) de large, avec une ouverture numérique du système de 0.5 (angle d'ouverture du pinceau laser au point de focalisation, voir figure 2). La profondeur de champ (épaisseur de disque chauffée par le pinceau) est alors très faible, et de l'ordre de 1 µm (inversement proportionnelle au carré de l'ouverture numérique).

La figure 2A montre alors un pinceau mince du type que l'on vient de décrire, correctement axé sur la surface du disque. Le pinceau laser 8 étant émis depuis la partie haute sur la figure, une lentille de focalisation 9 focalise ce pinceau sur une surface chauffée 10 (figurée ici par un rectangle allongé) de la couche sensible 11 du disque 2, avec un angle d'ouverture 12. Un actuateur non représenté mais dont le mouvement est symbolisé par une double flèche 40, permet le déplacement de la lentille de focalisation 9 selon la direction verticale (haut/bas sur la figure 2) selon la position locale de la surface du disque, de manière à conserver le point focal (centre de la surface chauffée 10) au sein de la couche sensible 11.

La figure 2B illustre une erreur de positionnement angulaire du pinceau laser, par exemple de quelques dizaines de milliradians. Un tel décalage angulaire provoque un décalage angulaire identique de la surface chauffée 10, qui vient maintenant chevaucher à la fois le substrat 13 et la couche de protection 14. Pour un pinceau de 100 µm de long, ce décalage angulaire n'entraîne pas un chevauchement très important, et reste donc sensiblement sans conséquence sur la qualité du disque optique. On conserve alors une initialisation homogène de la surface sensible du disque 2.

Par contre, l'utilisation d'une diode laser de forte puissance (4 W par exemple), entraîne la création d'un surface chauffée nettement plus grande (200 à 500 µm de long), comme on le voit sur la figure 2C. Dans cette situation, un décalage angulaire de même valeur que précédemment, provoque un chevauchement important de la surface chauffée 10 hors de la couche sensible 11, cette surface chauffée n'étant plus chauffée de manière homogène. L'initialisation du disque peut alors être déficiente, du fait de la faible profondeur de champ choisie par ces dispositifs classiques.

Au contraire, le dispositif de la présente invention utilise volontairement un angle d'ouverture 12 faible, avec de façon connexe une profondeur de champ nettement accrue, ici de l'ordre de 100 µm contre 1 µm dans l'art antérieur. Le pinceau focalisé sur le disque est alors de nettement plus grande dimension, avec une largeur voisine de 5 à 20 µm, contre 1 µm classiquement, et donc une densité de puissance plus faible à puissance de diode laser égale.

Dans ce cas, l'élargissement de la largeur du pinceau permet un préchauffage de la couche sensible, qui facilite la cristallisation de ladite couche 11.

On comprend alors sur les figures 3A et 3B qu'avec une profondeur de champ importante, un décalage angulaire de quelques dizaines de milliradians du pinceau laser 8 par rapport à la surface du disque 2 ne modifie pas la densité de chauffage transmise à la couche sensible 11 sur l'ensemble de la surface chauffée 10, ce qui garantit une initialisation homogène de la couche sensible 11 du disque optique numérique réinscriptible 2.

Ce choix de profondeur de champ élevé permet donc une tolérance nettement plus grande sur le positionnement du pinceau laser par rapport à la surface du disque, ce qui conduit à une amélioration très significative de fiabilité à coût réduit et conception simplifiée, le système de focalisation étant extrêmement simplifié.

En résumé, le procédé qui a été choisi par le présent dispositif concernant l'initialisation du disque 2 est d'utiliser une puissance lumineuse importante et de faire passer une tache lumineuse large à grande profondeur de champ à vitesse élevée sur la surface du disque 2, alors que dans l'art antérieur une tache lumineuse étroite passe à faible vitesse sur cette surface. Le principe suivant est alors mis en application ici: la loi exprimant la température d'un point de la surface du disque en fonction du temps est conservée si l'on grandit pareillement la largeur de la tache lumineuse et la vitesse de défilement de la tache, à densité optique constante.

On comprend que le choix de réalisation du sous-ensemble optique 1 avec une profondeur de champ importante amène l'utilisation aisée d'une puissance optique maximale tout en limitant les contraintes mécaniques et optiques. De même, il est clair que le choix de diodes laser 5 comme source de chauffage est justifiée par leur coût faible et leur encombrement limité.

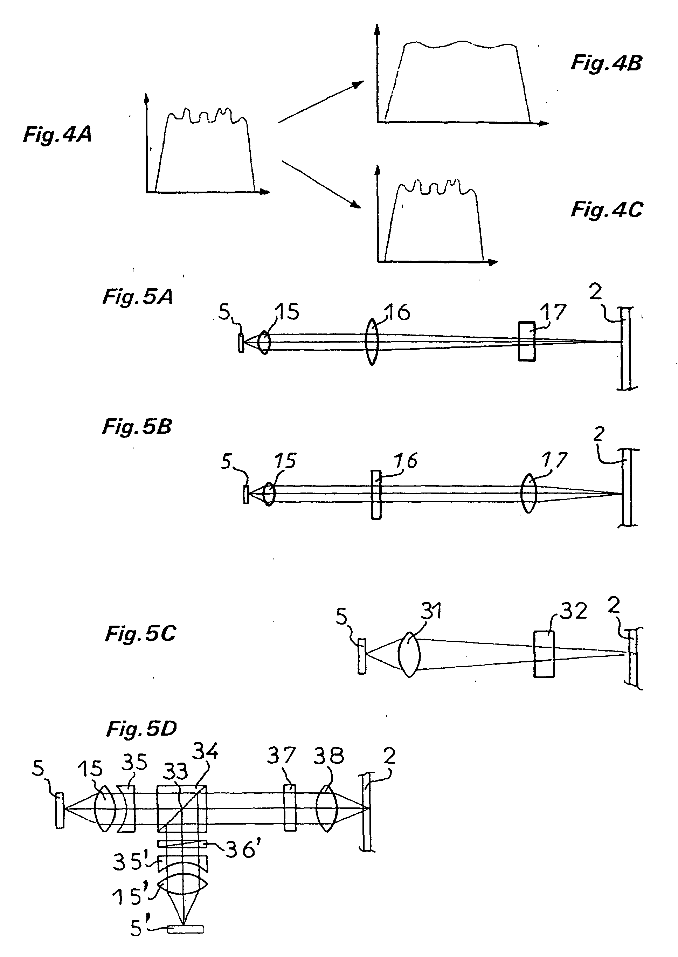

En faisant maintenant référence à la figure 4, il est clair que du fait de la simplification du chemin optique utilisé dans le présent sous-ensemble optique 1, on vient automatiquement atténuer le bruit spatial, c'est à dire les disparités de puissance et de caractéristiques optiques, existant dans la barrette 5 utilisée. Ceci permet de réduire les exigences sur le niveau admissible de bruit spatial lors de la sélection de telles barrettes, en se permettant un certain flou sur le grand axe du faisceau, ce qui contribue encore à réduire le coût global du dispositif. On atténue alors les irrégularités de barrette en défocalisant la lentille associée.

Au contraire, un dispositif classique, qui focalise parfaitement le pinceau laser 8 sur la couche sensible 11, reproduit tout aussi parfaitement les imperfections de la barrette 5, ce qui contribue à une inhomogénéité du chauffage de la surface chauffée 10.

La figure 4A illustre un profil de puissance d'une barrette laser 5. L'abscisse est utilisée pour représenter une position sur la barrette concernée tandis que l'axe des ordonnées indique une puissance. La figure 4B illustre le profil de puissance transmis sur la surface chauffée par un dispositif conforme à l'invention tandis que la figure 4C illustre un profil de puissance transmis sur la surface chauffée d'un initialiseur de l'art antérieur.

De manière à créer une tache lumineuse de profondeur de champ importante, présentant par exemple une longueur de 50 µm et une largeur de 6 µm, à partir d'un pinceau laser existant créé par une barrette laser 5 classique présentant par exemple une longueur de 200 µm et une largeur de 1 µm, il est nécessaire de réaliser deux grandissements différents sur les deux axes.

Le sous-ensemble optique 1 comporte à cet effet deux lentilles cylindriques permettant de travailler sur les deux axes séparément.

La lentille travaillant sur l'axe latéral (dimension du pinceau initial de 1 µm), doit fournir un grandissement de 6 environ. Sachant que la profondeur de champ est proportionnelle au carré du grandissement, par rapport à un grandissement de 1 tel qu'utilisé généralement dans l'art antérieur, la profondeur de champ est 36 fois plus importante et donc 36 fois moins sensible à la focalisation pour un système optique tel que décrit ici par rapport à un système optique classique. Dans un tel cas, compte tenu des tolérances mécaniques de l'initialiseur, le dispositif peut permettre de ne pas utiliser de système spécifique de focalisation.

Sur l'axe longitudinal (dimension initiale du pinceau 200 µm) pour lequel aucune diffraction n'est nécessaire, la focale de la lentille cylindrique doit permettre simplement d'assurer une focalisation de cet axe au même endroit que l'axe latéral, avec un grandissement inférieur à 1, soit 0,25 dans l'exemple donné. Ce type de système est connu de l'homme du métier sous le nom de système "4f".

A partir de la même barrette de 1 µmx200 µm, on peut aussi envisager une tache lumineuse de par exemple 9 µmx100 µm ou encore de 12 µmx200 µm. Dans ces exemples, on a alors une profondeur de champ 81 fois ou 144 fois plus grande qu'avec un grandissement de 1 tel qu'utilisé habituellement. Toutefois, cette augmentation de la profondeur de champ s'accompagne ici d'une densité optique décroissante.

Dans un exemple de réalisation donné à titre non limitatif et représenté sur les figures 5A et 5B, le chemin optique comprend d'abord un collimateur asphérique 15 permettant d'obtenir un faisceau parallèle, et deux lentilles cylindriques 16, 17 dans les conditions de Gauss au centre pour la qualité optique du faisceau, ou corrigées pour être utilisées dans des ouvertures plus importantes.

On note qu'il est intéressant de disposer d'un faisceau parallèle en sortie du collimateur asphérique 15, pour récupérer une partie de la lumière à des fins de contrôle et d'asservissement de la puissance laser.

Les figures 5A et 5B montrent le même dispositif, une fois en vue de dessus et l'autre fois en vue de côté.

Par ailleurs, puisque la contrainte de focalisation est supprimée, il est loisible d'utiliser des lentilles standards du commerce et de réduire les exigences de précision de positionnement relatif de ces lentilles 16, 17.

Les types et dimensions des lentilles choisies se déduisent de la puissance et de la taille du pinceau lumineux.

En résumé, le sous-ensemble optique est simple et donc économique et de réalisation et maintenance facilitées.

La figure 5C montre quant à elle une forme de réalisation n'utilisant que deux lentilles cylindriques. Il s'agit ici de lentilles asphériques calculées et obtenues par moulage. Une première lentille 31 agit sur le grandissement de la longueur de la barrette laser tandis que la seconde lentille 32 agit sur le grandissement de la largeur de cette barrette.

Contrairement aux deux premières formes de réalisation présentées, les lentilles utilisées ici sont des lentilles spécifiques dont la forme est calculée en fonction des caractéristiques que l'on souhaite obtenir.

La quatrième forme de réalisation illustrée par la figure 5D montre une source lumineuse comportant deux barrettes lasers 5 et 5'. Ces deux barrettes sont identiques et conformes à la description faite ci-dessus en référence à la barrette 5. Elles sont disposées à angle droit de telle sorte que les faisceaux émis convergent vers un point d'intersection 33.

Au niveau du point d'intersection 33 se trouve un cube séparateur de polarisation 34. Entre chaque barrette 5, resp. 5', et le cube séparateur de polarisation 34 se trouvent à chaque fois un collimateur 15, resp. 15', ainsi qu'une lentille cylindrique 35, resp. 35'. Entre la lentille 35' et la cube séparateur de polarisation 34 se trouve aussi une lame demi-onde 36'. Cette lame 36' permet de modifier la polarisation de la lumière émise par la barrette 5'. Le cube séparateur de polarisation 34, comme le montre la figure 5D, présente un plan incliné à 45° par rapport aux faisceaux émis par les barrettes 5 et 5'. Ce plan incliné est transparent pour les faisceaux issus de la barrette 5 et est réfléchissant pour ceux issus de la barrette 5' et qui présentent, grâce à la lame demi-onde 36', une polarisation différente de 90° par rapport à ceux-ci. En sortie de cube 34, les deux faisceaux issus des deux barrettes 5 et 5' viennent donc se superposer.

Ces deux faisceaux traversent encore une lentille cylindrique 37 et une lentille asphérique 38 avant de venir se projeter à la surface du disque 2.

La forme de réalisation décrite ci-dessus est envisageable avec un dispositif selon l'invention car les contraintes mécaniques sont moins élevées qu'avec les dispositifs de l'art antérieur. lci, si les deux faisceaux ne convergent pas exactement vers le même point de la surface du disque 2, compte tenu des dimensions de la tache lumineuse, cette différence ne sera pas sensible sur l'initialisation du disque.

La commande laser 6, qui contrôle la barrette laser 5 (voir figure 1), réalise un asservissement laser sur trois niveaux temporels : un asservissement rapide en courant (quelques microsecondes) de type analogique pour l'élimination du bruit, un asservissement en lumière (quelques millisecondes) permettant de moduler la puissance laser de l'intérieur du disque vers l'extérieur pour une utilisation à vitesse angulaire constante du disque initialisé utilisant un dispositif appelé CAV (Constant Angular Velocity ou vitesse angulaire constante), et un asservissement lent (dont le senseur est la réflectivité) qui doit permettre des calibrages (par exemple test de puissance et vieillissement de diode laser à intervalles réguliers).

Ce dispositif d'asservissement est alors de réalisation connue de l'homme du métier, et n'est donc pas détaillé plus avant ici.

En ce qui concerne le sous-ensemble de rotation 4 placé sous le disque 2 à initialiser, il comporte un système d'aspiration 18, qui vient maintenir le disque 2 en place et selon un plan précis, un moteur de rotation 19 et un codeur de rotation 20. Un dispositif de commande de rotation 21 régule le fonctionnement du moteur de rotation 19. Il est alors possible d'initialiser le disque 2 avec une vitesse linéaire d'initialisation constante. Le dispositif de commande de rotation 21 est parfois appelé CLV (Constant Linear Velocity ou vitesse linéaire constante).

La plupart de ces dispositifs sont de nature connue en soi dans ce domaine.

On note cependant que le système d'aspiration 18 du disque 2 est réalisé au travers des roulements 22 du moteur de rotation 19, par un moyen 23 de type classique non détaillé.

Le disque 2 destiné à être initialisé est alors posé sur une surface isolante et souple qui assure un contact sur toute sa surface, et est aspiré par son centre. Ce dispositif, qui est dépourvu de rainures, permet d'éviter des déformations locales du disque et des points durs (isolant thermique). De façon originale, une feuille poreuse souple est disposée entre le plateau aspirant et le disque pour réaliser une aspiration homogène sur toute la surface du disque.

Le moteur de rotation 19 du disque 2 est un moteur de type sans balais, susceptible d'atteindre des vitesses élevées (de l'ordre de 50 000 tours par minute). On choisit également un moteur capable d'atteindre 25 000 tours par minute en moins de 1 seconde, de manière à réduire encore la durée de cycle complet d'initialisation.

Le disque à initialiser 2 étant disposé sur le sous-ensemble de rotation 4, dont le but est de permettre son maintien dans un plan prédéterminé, et sa rotation adéquate, le sous-ensemble optique 1 balaie la surface sensible dudit disque 2 par un pinceau laser de caractéristiques décrites plus haut. Ce sous-ensemble optique est alors asservi pour son positionnement au sous-ensemble d'avance 3, qui va maintenant être décrit.

Le sous-ensemble d'avance 3 comporte principalement un moteur de rotation 24 de l'avance, et un dispositif de contrôle d'avance 25.

Le moteur de rotation 24 de l'avance permet de réaliser les fonctions suivantes :
- détection des phases des pôles du rotor,
- recherche de la fonction de transfert,
- détection des butées de mouvement (limites 26A, 26B, 26C de mouvement angulaire de la poutre optique 26 lors de l'initialisation du disque 2),
- asservissement en position angulaire de la poutre optique 26,
- asservissement du mouvement de la poutre optique 26 à la rotation du disque à vitesse très faible,
- accès rapide à un point quelconque du disque 2 avec une accélération de 10g au niveau de la charge (c'est à dire au niveau du pinceau lumineux parallèle à l'axe de rotation du disque 2).

L'utilisation à la place du moteur 24 d'un moteur pas à pas commandé à micro-pas donne également de bons résultats.

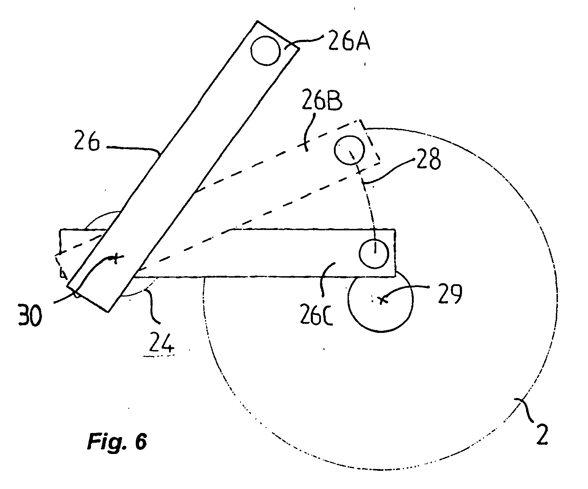

Ce système d'avance est particulier en ce que, contrairement aux dispositifs classiques, la fonction d'avance n'est pas réalisée par un moteur linéaire, mais par un moteur de rotation 24 (voir figure 6).

Ce choix d'un moteur de rotation 24 est dicté par deux considérations : d'une part, il est insensible aux chocs en translation, et, d'autre part, cette rotation permet de ranger la poutre optique 26 (qui contient le sous-ensemble optique 1) plus rapidement pour libérer le disque 2, que dans le cas de moteur de translation. Il en résulte un gain de temps sur le cycle complet d'initialisation.

La figure 6 montre en vue de dessus très schématisée le système d'avance en rotation selon l'invention. On constate que le moteur de rotation pour l'avance 24 permet un passage entre une position haute 26A de la poutre optique 26, (permettant un rangement de celle-ci et le dépôt ou l'enlèvement du disque 2 à initialiser), une position tangente 26B correspondant au rayon extérieur du disque 2, pour laquelle débute effectivement l'opération d'initialisation, et une position intérieure 26C, qui correspond au rayon le plus intérieur du disque à initialiser. La trajectoire du pinceau focalisé est illustrée par l'arc de cercle 28.

Le dispositif peut comporter un système de correction d'erreur de positionnement due à la trajectoire courbe, de type classique, non détaillé ici.

Ce système d'avance par rotation permet d'obtenir une excellente précision angulaire entre l'axe 29 de rotation du disque 2 et l'axe 30 de rotation de la poutre optique 26. Ce point est particulièrement intéressant dans la mesure où le présent dispositif n'utilise pas de dispositif d'asservissement de focalisation du pinceau lumineux sur la surface du disque 2.

Le dispositif comporte un algorithme de commande permettant d'atteindre des accès rapides, de l'ordre de quelques g (1g valant environ 9,81 m/s²) au niveau de la charge, de manière à réduire le temps de cycle.

Un asservissement en position et en vitesse de type classique est également intégré au dispositif.

Le système d'avance pourrait utiliser dans le présent exemple non limitatif des spirales imbriquées qui permettent de mettre à profit à la fois l'aller et le retour de la poutre optique 26 pour réaliser l'initialisation du disque 2.

Le système décrit ci-dessus permet également l'utilisation de lasers multiples qui se présentent sous la forme de barrettes alignées les unes derrière les autres mais avec un espacement entre chaque barrette. L'homme du métier, en combinant des dispositifs tels que décrits ci-dessus, peut réaliser un dispositif d'initialisation qui décrit plusieurs spirales lors de l'initialisation du disque. Par asservissement de l'avance, il est alors possible de réaliser un gain de temps important lors de l'initialisation.

Le moteur de rotation de l'avance 24 est de type similaire au moteur de rotation 19 du disque (c'est à dire un moteur électrique sans balais, capable d'atteindre 25 000 tours par minute en moins de 1 seconde).

On note que le moteur de rotation de l'avance 24 et le moteur de rotation 19 du disque 2 sont synchronisés. Le moteur de rotation de l'avance 24 est esclave du moteur de rotation 19 du disque 2. L'algorithme de commande utilisé a les mêmes avantages dans ce cas qu'un entraînement par engrenage, en particulier la rigueur dans le rapport de réduction.

En ce qui concerne le mode de fonctionnement du dispositif, il est de type classique.

Les étapes de l'initialisation d'un disque optique numérique sont alors les suivantes :
- chargement du disque 2, par prise du disque par un robot (non détaillé car classique) et dépôt du disque 2 sur le plateau aspirant du sous-ensemble rotation 4 de l'initialiseur,
- aspiration du disque 2 pour le maintenir en position,
- mise en rotation du disque 2 par le moteur de rotation 19, pour atteindre une vitesse de défilement de piste comprise entre 3 m/s et 50 m/s,
- mise en place du système optique 26 au dessus du disque 2 (au niveau du rayon extérieur, position tangentielle 26B), par mise en marche simultanée du moteur de rotation d'avance 24,
- mise en marche de la diode laser 5, et initialisation du disque 2 pendant une durée fonction de la puissance optique choisie (la durée d'initialisation étant sensiblement inversement proportionnelle à la puissance optique transmise au disque), ici réduit d'un facteur 16,
- retour du système optique 26 dans sa position initiale de repos 26A, et arrêt de la rotation du disque 2 par arrêt du moteur de rotation 19,
- légère surpression pour libérer le disque 2 du plateau du sous-ensemble de rotation 4,
- déchargement du disque 2 par le robot.

En variante, il est possible de réduire encore le temps de cycle en mettant en rotation un second disque pendant l'initialisation du premier, par exemple sur un plateau coplanaire de manière à utiliser autant que possible en permanence le pinceau laser d'initialisation (le second disque étant disposé de façon à pouvoir également être initialisé par le pinceau lumineux lors du mouvement angulaire de celui-ci). Diverses mises en oeuvre peuvent être réalisées sur ce principe.

La portée de la présente invention ne se limite pas aux détails des formes de réalisation ci-dessus considérés à titre d'exemples, mais s'étend au contraire aux modifications à la portée de l'homme de l'art.

## Revendications

1. Procédé d'initialisation de disque optique numérique réinscriptible (2) du type comportant une couche sensible (11) à deux états stables et tel qu'un chauffage local réalisé par projection d'une tache lumineuse permet le passage d'un état à l'autre état de façon réversible, la puissance lumineuse et la vitesse de passage de la tache lumineuse correspondant à une densité lumineuse optique permettant de réaliser le passage d'un état à l'autre de la couche sensible,
**caractérisé en ce que** la tache lumineuse présente une profondeur de champ supérieure à 25 µm et une largeur comprise entre 5 et 20 µm pour une longueur comprise entre 50 et 500 µm environ.

2. Procédé d'initialisation d'un disque optique selon la revendication 1, **caractérisé en ce qu'**il comporte les étapes suivantes :
- chargement d'un disque (2), et dépôt du disque (2) sur un plateau aspirant d'un sous-ensemble rotation (4) d'un dispositif d'initialisation,
- aspiration du disque (2) pour le maintenir en position,
- mise en rotation du disque (2) par un moteur de rotation (19), pour atteindre une vitesse de défilement de piste comprise entre 3 m/s et 50 m/s,
- mise en place d'un système optique (26) comprenant au moins une diode laser (5) au dessus du disque (2), au niveau du rayon extérieur (26B), par mise en marche simultanée d'un moteur de rotation d'avance (24),
- mise en marche de la diode laser (5), et initialisation du disque (2) pendant une durée fonction de la puissance optique choisie,
- retour du système optique (26) dans sa position initiale de repos (26A), et arrêt de la rotation du disque (2) par arrêt du moteur de rotation (19),
- légère surpression pour libérer le disque (2) du plateau du sous-ensemble de rotation (4),
- déchargement du disque (2).

3. Dispositif d'initialisation d'un disque optique numérique réinscriptible (2) présentant une couche sensible (11 ), comportant :
- un sous-ensemble optique (1) créant un faisceau de chauffage local de la couche sensible (11) du disque (2), adapté à permettre le changement de phase du matériau constituant ladite couche sensible (11) et l'initialisation effective du disque (2),
- un sous-ensemble d'avance (3) du faisceau de chauffage sur la surface du disque (2), et
- un sous-ensemble de rotation (4) qui vient entraîner le disque (2) en rotation lors de la phase d'initialisation,
**caractérisé en ce que** le sous ensemble optique (1) comprend au moins une diode laser (5) commandée par un dispositif de commande laser (6), et un système optique de focalisation (7),
**en ce que** chaque diode laser (5) est de longueur d'onde sensiblement comprise entre 700 et 1000 nanomètres, et
**en ce que** le dispositif utilise un faisceau de chauffage ayant un angle d'ouverture (12) faible, une profondeur de champ supérieure à 25 µm au niveau de la couche sensible (11), et une largeur comprise entre 5 et 20 µm pour une longueur comprise entre 50 et 500 µm environ.

4. Dispositif selon la revendication 3, **caractérisé en ce que** le sous-ensemble optique (1) un réalise deux grandissements différents sur les deux axes du pinceau laser créé par la diode laser (5) au nombre d'au moins une.

5. Dispositif selon la revendication 4, **caractérisé en ce que** le sous-ensemble optique (1) comporte deux lentilles cylindriques permettant de travailler sur les deux axes séparément, la lentille travaillant sur l'axe latéral, fournissant un grandissement compris entre 6 et 15 environ, et la lentille travaillant sur l'axe longitudinal assurant une focalisation de cet axe au même endroit que l'axe latéral, avec un grandissement inférieur ou égal à 1.

6. Dispositif selon la revendication 5, **caractérisé en ce que** le sous-ensemble optique (1) comprend un collimateur asphérique (15) permettant d'obtenir un faisceau parallèle, et deux lentilles cylindriques (16, 17) dans les conditions de Gauss au centre, ou corrigées pour être utilisées dans des ouvertures plus importantes.

7. Dispositif selon l'une quelconque des revendications 3 à 6, **caractérisé en ce que** le dispositif de commande laser (6), qui contrôle la diode (5) au nombre d'au moins une, réalise un asservissement laser sur trois niveaux :
1/ asservissement rapide en courant (quelques microsecondes) de type analogique pour l'élimination du bruit,
2/ asservissement en lumière (quelques millisecondes) permettant d'augmenter la puissance de l'intérieur vers l'extérieur dans le cas d'une initialisation à vitesse angulaire constante,
3/ asservissement lent (dont le senseur est la réflectivité) qui doit permettre des calibrages.

8. Dispositif selon l'une quelconque des revendications 3 à 7, **caractérisé en ce que** le sous-ensemble de rotation (4) placé sous le disque (2) à initialiser comporte un système d'aspiration (18) qui vient maintenir le disque (2) en place selon un plan précis par l'intermédiaire d'une feuille poreuse souple destiné à prendre place entre un plateau et le disque (2) à initialiser, un moteur de rotation (19), un codeur de rotation (20), un dispositif de commande de rotation (21) régulant le fonctionnement du moteur de rotation (19), et **en ce que** le système d'aspiration (18) du disque (2) comporte des moyens pour effectuer cette aspiration entre des roulements (22) du moteur de rotation (19).

9. Dispositif selon l'une quelconque des revendications 3 à 8, **caractérisé en ce que** le sous-ensemble d'avance (3) du faisceau de chauffage sur la surface du disque (2) comprend un moyen de rotation (24), d'axe parallèle à l'axe de rotation du disque (2), et sur l'axe duquel est solidarisé une poutre optique (26) comprenant le sous-ensemble optique (1).

10. Dispositif selon l'une des revendications 3 à 9, **caractérisé en ce que** la diode laser (5) au nombre d'au moins une est une diode à large ouverture d'émission qui se présente sous la forme d'une barrette d'une puissance supérieure à 2 W, de préférence supérieure à 3 W.

11. Dispositif selon l'une des revendications 3 à 10, **caractérisé en ce qu'**il comporte deux diodes laser qui émettent chacune en direction d'un cube séparateur de polarisation destiné à combiner les deux sources lumineuses pour obtenir une tache lumineuse de plus grande puissance.

## Patentansprüche

1. Verfahren zum Initialisieren einer wiederbeschreibbaren digitalen optischen Platte (2) des Typs, der eine empfindliche Schicht (11) mit zwei stabilen Zuständen umfasst, derart, dass eine lokale Erwärmung, die durch Projektion eines Lichtflecks hervorgerufen wird, den Übergang von einem Zustand in den anderen in umkehrbarer Weise ermöglicht, wobei die Lichtleistung und die Vorbeibewegungsgeschwindigkeit des Lichtflecks einer optischen Leuchtdichte entspricht, die die Verwirklichung des Übergangs von einem Zustand in den anderen der empfindlichen Schicht ermöglicht,
**dadurch gekennzeichnet, dass** der Lichtfleck eine Tiefenschärfe von mehr als 25 µm und eine Breite im Bereich von 5 bis 20 µm für eine Länge im Bereich von etwa 50 bis etwa 500 µm aufweist.

2. Verfahren zum Initialisieren einer optischen Platte nach Anspruch 1, **dadurch gekennzeichnet, dass** es die folgenden Schritte umfasst:
- Laden und Ablegen einer Platte (2) auf einer Saugscheibe einer Drehuntereinheit (4) einer Initialisierungsvorrichtung,
- Ansaugen der Platte (2), um sie an ihrer Position festzuhalten,
- Versetzen der Platte (2) in Drehung durch einen Drehmotor (19), um eine Spurvorbeibewegungsgeschwindigkeit im Bereich von 3 m/s bis 50 m/s zu erreichen,
- Anordnen eines optischen Systems (26), das wenigstens eine Laserdiode (5) umfasst, über der Platte (2) auf Höhe des Außenradius (26B) durch gleichzeitiges Einschalten eines Vorrückdrehmotors (24),
- Einschalten der Laserdiode (5) und Initialisieren der Platte (2) während einer Zeitspanne, die von der gewählten optischen Leistung abhängt,
- Zurückstellen des optischen Systems (26) in seine anfängliche Ruheposition (26A) und Anhalten der Drehung der Platte (2) durch Anhalten des Drehmotors (19), und
- Erzeugen eines leichten Überdrucks, um die Platte (2) von der Scheibe der Drehuntereinheit (4) freizugeben,
- Entladen der Platte (2).

3. Vorrichtung zum Initialisieren einer wiederbeschreibbaren digitalen optischen Platte (2), die eine empfindliche Schicht aufweist, mit:
- einer optischen Untereinheit (1), die ein Strahlenbündel für die lokale Erwärmung der empfindlichen Schicht (11) der Platte (2) erzeugt, die die Änderung der Phase des Materials, aus dem die empfindliche Schicht (11) gebildet ist, und die effektive Initialisierung der Platte (2) ermöglicht,
- einer Untereinheit (3) zum Vorrücken des Erwärmungsstrahlenbündels auf der Oberfläche der Platte (2) und
- einer Drehuntereinheit (4), die die Platte (2) während der Initialisierungsphase rotatorisch antreibt,
**dadurch gekennzeichnet, dass** die optische Untereinheit (1) wenigstens eine Laserdiode (5), die von einer Laser-Steuervorrichtung (6) gesteuert wird, sowie ein optisches Fokussierungssystem (7) umfasst,
dass jede Laserdiode (5) eine Wellenlänge im Wesentlichen im Bereich von 700 bis 1000 Nanometer besitzt und
dass die Vorrichtung ein Erwärmungsstrahlenbündel verwendet, das einen geringen Öffnungswinkel (12) besitzt und auf Höhe der empfindlichen Schicht (11) eine Tiefenschärfe von mehr als 25 µm und eine Breite im Bereich von 5 bis 20 µm für eine Länge im Bereich von etwa 50 bis 500 µm aufweist.

4. Vorrichtung nach Anspruch 3, **dadurch gekennzeichnet, dass** die optische Untereinheit (1) längs der zwei Achsen des Laserstrahlenbündels, das von der Laserdiode (5) wenigstens in der Anzahl eins erzeugt wird, zwei unterschiedliche Vergrößerungen bewirkt.

5. Vorrichtung nach Anspruch 4, **dadurch gekennzeichnet, dass** die optische Untereinheit (1) zwei Zylinderlinsen umfasst, die ermöglichen, längs der beiden Achsen getrennt zu arbeiten, wobei die Linse, die auf der Querachse arbeitet, eine Vergrößerung im Bereich von etwa 6 bis 15 liefert und die Linse, die auf der Längsachse arbeitet, eine Fokussierung dieser Achse auf denselben Ort wie die Querachse mit einer Vergrößerung von höchstens 1 gewährleistet.

6. Vorrichtung nach Anspruch 5, **dadurch gekennzeichnet, dass** die optische Untereinheit (1) einen asphärischen Kollimator (15), der ermöglicht, ein paralleles Strahlenbündel zu erhalten, und zwei Zylinderlinsen (16, 17), die im Zentrum Gauß-Bedingungen genügen oder korrigiert sind, um mit größeren Öffnungen verwendet zu werden, umfasst.

7. Vorrichtung nach einem der Ansprüche 3 bis 6, **dadurch gekennzeichnet, dass** die Laser-Steuervorrichtung (6), die die Diode (5), die wenigstens in der Anzahl eins vorhanden ist, steuert, eine Laser-Regelung auf drei Ebenen verwirklicht:
1/ schnelle Stromregelung (einige Mikrosekunden) des analogen Typs, um das Rauschen zu beseitigen,
2/ Lichtregelung (einige Millisekunden), die ermöglicht, bei einer Initialisierung mit konstanter Winkelgeschwindigkeit die Leistung von innen nach außen zu erhöhen,
3/ langsame Regelung (bei der der Sensor das Reflexionsvermögen ist), die Kalibrierungen ermöglichen soll.

8. Vorrichtung nach einem der Ansprüche 3 bis 7, **dadurch gekennzeichnet, dass** die Drehuntereinheit (4), die unter der zu initialisierenden Platte (2) angeordnet ist, ein Saugsystem (18), das die Platte (2) über eine elastische poröse Lage, das zwischen einer Scheibe und der zu initialisierenden Platte (2) angeordnet werden soll, in einer präzisen Ebene festhält, einen Drehmotor (19), einen Drehcodierer (20) sowie eine Drehsteuervorrichtung (21), die den Betrieb des Drehmotors (19) reguliert, umfasst und dass das Saugsystem (18) der Platte (2) Mittel umfasst, um das Ansaugen zwischen Lagern (22) des Drehmotors (19) auszuführen.

9. Vorrichtung nach einem der Ansprüche 3 bis 8, **dadurch gekennzeichnet, dass** die Untereinheit (3) zum Vorrücken des Erwärmungsstrahlenbündels auf der Oberfläche der Platte (2) ein Drehmittel (24) mit einer zu der Drehachse der Drehplatte (2) parallelen Achse umfasst, an dessen Welle ein optischer Träger (26) befestigt ist, der die optische Untereinheit (1) umfasst.

10. Vorrichtung nach einem der Ansprüche 3 bis 9, **dadurch gekennzeichnet, dass** die Laserdiode (5), die wenigstens in der Anzahl eins vorhanden ist, eine Diode mit großer Emissionsöffnung ist, die die Form eines Stegs mit einer Leistung von mehr als 2 W, vorzugsweise mehr als 3 W, aufweist.

11. Vorrichtung nach einem der Ansprüche 3 bis 10, **dadurch gekennzeichnet, dass** sie zwei Laserdioden umfasst, die jeweils in Richtung eines Polarisationstrennwürfels emittieren, der dazu bestimmt ist, die beiden Lichtquellen zu kombinieren, um einen Lichtfleck mit größerer Leistung zu erhalten.

## Claims

1. Method of initialising a rewritable digital optical disc (2) of the type comprising a sensitive layer (11) with two stable states and such that local heating produced by the projection of a light spot allows passage from one state to the other state reversibly, the light power and the speed of passage of the light spot corresponding to an optical light density making it possible to achieve passage of the sensitive layer from one state to the other,
**characterised in that** the light spot has a depth of field greater than 25 µm and a width of between 5 and 20 µm for a length of between 50 and 500 µm approximately.

2. Method of initialising an optical disc according to Claim 1, **characterised in that** it comprises the following steps:
- loading a disc (2) and depositing the disc (2) on a suction plate of a rotation sub-assembly (4) of an initialisation device,
- suction of the disc (2) in order to hold in it position,
- rotation of the disc (2) by a rotation motor (19) so as to achieve a track movement speed of between 3 m/s and 50 m/s,
- positioning an optical system (26) comprising at least one laser diode (5) above the disc (2), at the external radius (26B), by simultaneously starting up an advance rotation motor (24),
- starting up the laser diode (5) and initialising the disc (2) for a period which is a function of the optical power chosen,
- returning the optical system (26) to its initial idle position (26A) and stopping the rotation of the disc (2) by stopping the rotation motor (19),
- slight overpressure in order to release the disc (2) from the plate of the rotation sub-assembly (4),
- unloading the disc (2).

3. Device for initialising a rewritable digital optical disc (2) having a sensitive layer (11), comprising:
- an optical sub-assembly (1) creating a beam for the local heating of the sensitive layer (11) of the disc (2), adapted to allow the change in phase of the material constituting the said sensitive layer (11) and the effective initialisation of the disc (2),
- a sub-assembly (3) for moving the heating beam forwards over the surface of the disc (2), and
- a rotation sub-assembly (4) which drives the disc (2) in rotation during the initialisation phase,
**characterised in that** the optical sub-assembly (1) comprises at least one laser diode (5) controlled by the laser control device (6), and an optical focusing system (7),
**in that** each laser diode (5) has a wavelength approximately between 700 and 1000 nanometres, and
**in that** the device uses a heating beam having a small beam angle (12), a depth of field greater than 25 µm at the sensitive layer (11), and a width of between 5 and 20 µm for a length of between approximately 50 and 500 µm.

4. Device according to Claim 3, **characterised in that** the optical sub-assembly (1) performs two different magnifications on the two axes of the laser beam created by the laser diode (5) at least one in number.

5. Device according to Claim 4, **characterised in that** the optical sub-assembly (1) comprises two cylindrical lenses making it possible to work on the two axes separately, the lens working on the lateral axis supplying a magnification of between approximately 6 and 15, and the lens working on the longitudinal axis providing a focusing of this axis at the same point as the lateral axis, with a magnification less than or equal to 1.

6. Device according to Claim 5, **characterised in that** the optical sub-assembly (1) comprises an aspherical collimator (15) making it possible to obtain a parallel beam, and two cylindrical lenses (16, 17) under Gauss conditions at the centre, or corrected in order to be used in larger beam angles.

7. Device according to any one of Claims 3 to 6, **characterised in that** the laser control device (6), which controls the diode (5) at least one in number, implements a laser control on three levels:
1) rapid control in terms of current (a few microseconds) of the analogue type for eliminating noise,
2) control in terms of light (a few milliseconds) making it possible to increase the power from inside to outside in the case of initialisation at constant angular speed,
3) slow control (of which the sensor is the reflectivity) which must allow calibrations.

8. Device according to any one of Claims 3 to 7, **characterised in that** the rotation sub-assembly (4) placed under the disc (2) to be initialised comprises a suction system (18) which holds the disc (2) in place on a precise plane by means of a flexible porous sheet intended to fit between a plate and the disc (2) to be initialised, a rotation motor (19), a rotation coder (20), and a rotation control device (21) regulating the functioning of the rotation motor (19), and **in that** the suction system (18) for the disc (2) comprises means for effecting this suction between windings (22) of the rotation motor (19).

9. Device according to any one of Claims 3 to 8, **characterised in that** the sub-assembly (3) for moving the heating beam forwards on the surface of the disc (2) comprises a rotation means (24), with its axis parallel to the axis of rotation of the disc (2), and on the axis of which an optical girder (26) comprising the optical sub-assembly (1) is fixed.

10. Device according to one of Claims 3 to 9, **characterised in that** the laser diode (5) at least one in number is a diode with a wide emission aperture which is in the form of an array with a power greater than 2 W, and preferably greater than 3 W.

11. Device according to one of Claims 3 to 10, **characterised in that** it comprises two laser diodes which each emit in the direction of a polarisation separating cube intended to combine the two light sources in order to obtain a light spot with a higher power.
